# EUROPEAN PATENT APPLICATION

(11) **EP 4 811 107 A1**
(43) Date of publication of application: **23.09.2026**
(21) Application number: 25275018.7
(22) Date of filing: 19.03.2025
(51) Int. Cl.: G06F 3/14, G09G 3/20, G09G 3/32, G09G 5/36

(54) **IMAGE TRANSMISSION USING A BINARY PIXEL REPRESENTATION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of transmitting an image represented in a raster graphics format from a graphics processor to an image display apparatus that displays images on a display device using binary pixels is defined. The method comprises converting, at a graphics processor, the raster graphics format representation of the image into a binary pixel representation of the image, encoding, at the graphics processor, the binary pixel representation into a raster frame and transmitting the raster frame from the graphics processor to an image display apparatus using a video interface that uses the raster graphics format.

## Description

### FIELD

The present invention relates to transmitting an image obtained in a raster graphics format from a graphics processor to an image display device wherein the image is transmitted in a binary pixel representation.

### BACKGROUND

In general, industrial video standards such as ANSI/CTA-861 HDMI, ARINC818, Display Port, DVI, SMPTE SDI, SMPTE 2022/2110 etc. convey video from a video source to a video end point comprising a display device using pixel packed raster frames. When pixel packed raster frames are used, each frame is represented using a raster graphics format representation of the frame. These raster graphics formats frames of the video comprise rasters of packed pixels in formats such as RGB (red, green, blue) with up to, for example, 32 bit per colour; grey scale images with up to, for example, 10 bits per pixel; Luman and Chroma colour formats such as YCbCr with up to, for example, 32 bit per colour; or any other suitable packed pixel format. However, many display devices have binary pixels that are either on or off. This means the display device has to convert the raster graphics format representation of each frame into a binary pixel representation of the frame before the frame can be displayed. This requires the use of a frame buffer at the video end point and also requires that the video end point comprises a video format converter that converts the raster graphics format version of the frame stored in the frame buffer to the binary pixel representation. This can lead to latency as it requires the display device to receive the entire raster graphics frame before it begins to display the frame. The need for the video format converter at the video endpoint also results in additional processing requirements for the video end point which adds latency and complexity to the video end point.

Given the above, it would therefore be desirable to have a method of transmitting video provided in industrial video standards that overcomes these disadvantages.

The embodiments described below are not limited to implementations which solve any or all of the disadvantages described above.

### SUMMARY

According to an aspect of the present invention, there is provided a method of transmitting an image represented in a raster graphics format from a graphics processor to an image display apparatus that displays images on a display device using binary pixels. The method comprises converting, at a graphics processor, the raster graphics format representation of the image into a binary pixel representation of the image, wherein: the binary pixel representation comprises a bit string for each pixel, wherein the bit string for each pixel represents a portion of a display time of the image that the pixel should be switched on to cause the image display apparatus to display the pixel on the display device at a brightness defined in the raster graphics representation; and each bit string represents the portion of the display time using n bits numbered from 0 to n-1. The method also comprises encoding, at the graphics processor, the binary pixel representation into a raster frame by encoding the binary pixel representation using a plurality of sequential bitplanes, wherein each respective bitplane of the plurality of sequential bitplanes comprises a respective same numbered bit from each bit string of the binary pixel representation; and transmitting the raster frame from the graphics processor to an image display apparatus using a video interface that uses the raster graphics format. This removes the need to buffer an entire frame before display and hence reduces latency in transmitting and display images and video that are to be displayed in a binary pixel representation, while still enabling the use of standard video interfaces, standard video standards and standard video encodings.

In some examples, the image display apparatus displays images using binary pixels comprising a plurality of colour components; the bit string for a respective pixel comprises a bit string for each colour component of the respective pixel, wherein the bit string for a respective colour component of the respective pixel represents a portion of the display time of the image that the respective colour component of the respective pixel should be switched on to cause the image display apparatus to display the respective colour component of the respective pixel on the display device at a brightness defined in the raster graphics representation; and each respective bitplane of the plurality of sequential bitplanes comprises a respective same numbered bit from each bit string of the binary pixel representation for a single colour component of the binary pixel, wherein the plurality of sequential bitplanes include bitplanes for each colour component of the binary pixels. Thus, the method above can be used with colour pixels as well as greyscale or black/white pixels.

In some examples, plurality of colour components comprise either: red, green and blue, RGB, colour components; or YCbCr colour components. Hence, the above method can be used with display devices that are driven using standard RGB or YCbCr signals.

In some examples, the bits in each bit string are ordered from a most significant bit at bit 0 to a least significant bit at bit n-1, and wherein the more significant a bit within the bit string the longer the portion of the display time represented by the bit. This provides an efficient way to represent the display time and can be used to determine the packing of bitplanes.

In some examples, the ordering of the bitplanes in the sequential bitplanes is an order in which the bits in bitplanes will be used to control the binary pixels of the display device. Hence, when the bitplanes are received by the display they can be displayed directly with no latency waiting for subsequent bitplanes.

In some examples, encoding the binary pixel representation using the plurality of sequential bitplanes comprises encoding the binary pixel representation into n sequential bitplanes numbered from 0 to n-1, and optionally wherein the ith bitplane contains the ith most significant bit from the bit string for each pixel of the image, wherein i is from 0 to n-1. Having the most significant bit which is displayed for a longer portion of the display time in the first bitplane means the bitplane displayed for the longest portion of the display is received first. This means the display device does not have to wait before starting to display bitplanes.

In some examples, encoding the binary pixel representation using the plurality of sequential bitplanes comprises encoding the binary pixel representation into more than n sequential bitplanes, wherein a bitplane representing a bit number more significant than the least significant bit occurs more than once in the sequential bitplanes. Having more than one bitplane per bit enables, for example, all bitplanes to be displayed for the same time simplifying display. It can also split the display time of the longest displayed bit over several bitplanes to reduce artifacts.

In some examples, the method further comprises receiving, at the image display apparatus, the raster frame; and sequentially reading, at the image display apparatus, a bitplane from the sequential bitplanes in the raster frame wherein the bitplanes are read in sequential order; and sequentially driving the display device according to the read bitplane by illuminating pixels in the display device as indicated by the bits of the bitplane. Hence, the method can also comprise displaying the bitplanes.

In some examples, the receiving the raster frame comprises receiving the sequential bitplanes sequentially; and the sequentially reading and driving the display device with a bitplane from the sequential bitplanes comprises reading and driving the display device with an initial bitplane while a further bitplane is being received. This allows display of the bitplanes with minimal buffering allowing a simplified image display apparatus.

In one particular example, the image comprises a first frame of video. In this particular example, the method may further comprise converting, at the graphics processor, raster graphics format representations of one or more further frames of video into binary pixel representations of the frames of video, wherein: the binary pixel representation of each frame of the one or more further frames comprises a bit string for each pixel, wherein each bit string represents a portion of a display time for the frame that the pixel corresponding to the bit string should be switched on to cause the display device of the image display apparatus to display the pixel at a brightness defined in the raster graphics representation of the frame; and each bit string represents the portion of the display time using n bits numbered from 0 to n-1. The method may then further comprise encoding, at the graphics processor, the binary pixel representations of each frame into one or more raster frames by encoding the binary pixel representation of each frame using a plurality of sequential bitplanes, wherein each respective bitplane of the plurality of bitplanes for each frame comprises a respective same numbered bit from each bit string of the binary pixel representation. Hence, the above method can be used to send continuous video and multiple frames of video.

In some examples of the particular example, the bits of each bit string are ordered from a most significant bit at bit 0 to a least significant bit at bit n-1 and wherein the more significant a bit within the bit string the longer portion of the display time represented by the bit. This provides an efficient bit string for use in encoding bitplanes.

**In** some examples of the particular example, a binary pixel representation for more than one frame of video is encoded into a single raster frame of the one or more raster frame. This allows space saving in the raster frames and also allows faster transmission of frames of video. **In** this example, in some cases, the binary pixel representation for a second frame of the more than one frames of video is encoded in the single raster frame after the binary pixel representation of a first frame of the more than one frames of video. Hence, the video frames are provided in order.

In some examples, the binary pixel representation comprises a planar image format. Hence the method can be used with standard planar image format video.

In some examples, a portion of the display time represented by a bit in the bit string is given by $\frac{1}{{2}^{i + 1}}$, wherein i is the number of the bit in the bit string and goes from 0 to n-1. This enables a bit string to represent different portions of the display time with different bits.

In some examples, encoding the binary pixel representation using a plurality of sequential bitplanes comprises encoding the binary pixel representation using a plurality of sequential bitplanes such that the plurality of sequential bitplanes are encoded using less than an entire frame period allowed by the raster frame. This allows the rest of the display time to be blank. This can reduce the effect of dynamic false contouring which occurs when movement in the display content or user's eye occurs meaning sub-frames represented in the bitplanes are no longer correctly fused by the user's vision system resulting in display artefacts. Minimizing the time the sequence of bitplanes is displayed reduces this effect.

In some examples, the method further comprises writing, by the graphics processor, control data into the raster frame. Here, in some examples, the control data comprises at least one of: an indication of a size of each bitplane; an indication of a portion of the display time represented by each bitplane; and an indication of a start and/or end point of the binary pixel representation within the raster frame. This can ensure the image display apparatus knows how to display the bitplanes.

According to another aspect of the present invention, there is provided a graphics processor comprising a processor; and a memory storing instructions, the instructions when executed by the processor cause the processor to perform a method. The method comprises converting the raster graphics format representation of the image into a binary pixel representation of the image, wherein: the binary pixel representation comprises a bit string for each pixel, wherein the bit string for each pixel represents a portion of a display time for the image that the pixel should be switched on to cause a display apparatus to display the pixel on a display device at a brightness defined in the raster graphics representation; and each bit string represents the portion of the display time using n bits numbered from 0 to n-1. The method further comprises encoding the binary pixel representation into a raster frame by encoding the binary pixel representation using a plurality of sequential bitplanes, wherein each respective bitplane of the plurality of bitplanes comprises a respective same numbered bit from each bit string of the binary pixel representation; and transmitting the raster frame from the graphics processor to the image display apparatus using a video interface that uses the raster graphics format. Hence, a graphics processor implementing the above methods is also defined.

In some examples, the image display apparatus displays images using binary pixels comprising a plurality of colour components; the bit string for a respective pixel comprises a bit string for each colour component of the respective pixel, wherein the bit string for a respective colour component of the respective pixel represents a portion of a display time of the image that the respective colour component of the respective pixel should be switched on to cause the image display apparatus to display the respective colour component of the respective pixel on the display device at a brightness defined in the raster graphics representation; and each respective bitplane of the plurality of bitplanes comprises a respective same numbered bit from each bit string of the binary pixel representation for a single colour component of the binary pixel, wherein the plurality of bitplanes include bitplanes for each colour component of the binary pixels. Hence, the graphics processor can be used

In some examples, encoding the binary pixel representation using the plurality of sequential bitplanes comprises: encoding the binary pixel representation into n sequential bitplanes numbered from 0 to n-1. Hence, there can be one bitplane for each bit of the bitstring allowing easy conversion between the bit string and the bitplanes.

In some examples, encoding the binary pixel representation using the plurality of sequential bitplanes comprises: encoding the binary pixel representation into more than n sequential bitplanes, wherein a bitplane representing a bit number more significant than the least significant bit occurs more than once in the sequential bitplanes. Having more than one bitplane per bit enables for example all bitplanes to be displayed for the same time simplifying display. It can also split the display time of the longest displayed bit over several bitplanes to reduce artifacts.

In some examples, the image comprises a first frame of video and the instructions, when executed further cause the processor to: convert raster graphics format representations of one or more further frames of video into binary pixel representations of the frames of video, wherein: the binary pixel representation of each frame of the one or more further frames comprises a bit string for each pixel, wherein each bit string represents a portion of a display time for the frame that the pixel corresponding to the bit string should be switched on to cause the display device of the image display apparatus to display the pixel at a brightness defined in the raster graphics representation of the frame; and each bit string represents the portion of the display time using n bits numbered from 0 to n-1; and encode, at the graphics processor, the binary pixel representations of each frame into one or more raster frames by encoding the binary pixel representation of each frame using a plurality of sequential bitplanes, wherein each respective bitplane of the plurality of bitplanes for each frame comprises a respective same numbered bit from each bit string of the binary pixel representation.

According to another aspect of the present invention, there is provided a system comprising a graphics processor as described in the aspects above and an image display apparatus. The image display apparatus comprises: a display device; a processor; and a memory, the memory storing instructions that when executed by the processor cause the processor to perform a method. The method comprises receiving the raster frame; sequentially reading a bitplane from the sequential bitplanes in the raster frame wherein the bitplanes are read in sequential order; and sequentially driving the display device according to the read bitplane by illuminating pixels in the display device as indicated by the bits of the bitplane. Hence, the invention also relates to a system that includes an image display apparatus that can display images using the bitplanes in a raster frame.

In some examples, the receiving the raster frame comprises receiving the sequential bitplanes sequentially; and the sequentially reading and driving the display device with a bitplane from the sequential bitplanes comprises reading and driving the display device with an initial bitplane while a further bitplane is being received. Hence, the bitplanes can be displayed as they are received reducing the need for buffering.

### BRIEF DESCRIPTION OF THE FIGURES

Embodiments of the invention will now be described by way of example only with reference to the figures, in which:
Figure 1 is a flowchart showing a method of transmitting an image in accordance with the present application;
Figure 2 shows an example of a binary pixel representation of an image;
Figure 3 shows an example of how bitplanes are packed into a raster frame;
Figure 4 is a flowchart showing a method of receiving and displaying an image in accordance with the present application;
Figure 5 shows a system that can be used to implement the methods of the present application; and
Figure 6 shows a computer-based device that can be used to implement the methods of the present application.

### DETAILED DESCRIPTION

In the present application, a raster graphics format representation of a frame is converted to a binary pixel representation of the frame at a graphics processor of the video source and this binary pixel representation is packed into a raster frame enabling the raster frame to be transmitted to a video end point in the form of an image display apparatus. The binary pixel representation comprises a plurality of bitplanes packed into the same raster frame. To this end, the binary pixel representation can be considered to comprise a bit string for each binary pixel of a display device at the image display apparatus. The bit strings correspond to a display time and the bit string for a specific pixel represents a portion of the display time for which that pixel of the display device should be turned on. Each bit string can be considered to consist of n numbered bits wherein the bits are numbered from 0 to n-1. For convenience the 0^{th} bit can be considered the most significant bit and the n-1^{th} bit the least significant bit. However, the skilled person would understand that in other examples the n-1^{th} bit may be the most significant bit and the 0^{th} bit the least significant bit. The skilled person would also understand other orderings of bits are also possible. Each bitplane comprises a bit for each pixel of the display and the bits for each pixel of the display in a single bitplane are same numbered bits. When the image display apparatus receives a first bitplane packed into the raster frame it can instantly begin displaying the bitplane for a display time associated with that bitplane while the rest of the raster frame and hence bitplanes are still being received. This removes the need to buffer an entire frame before display and hence reduces latency in transmitting and display images and video that are to be displayed in a binary pixel representation, while still enabling the use of standard video interfaces, standard video standards and standard video encodings.

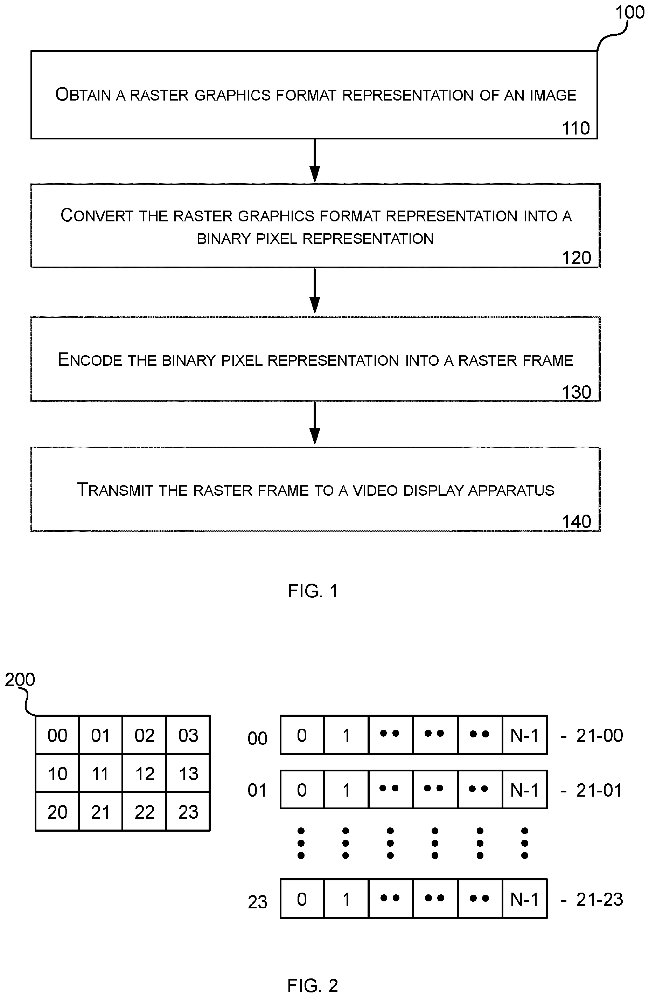

Figure 1 is a flowchart illustrating a method 100 of transmitting an image, which can be a frame of a video, represented in a raster graphics format from a graphics processor to an image display apparatus. The raster graphics format can comprise any raster of packed pixels in formats including (a) grey scale images with up to, for example, 10 bits per pixel; and (b) colour formats such as RGB with, for example, 5 to 16 bits per colour or component colour formats such as YCbCr (YUV) with, for example, 5 to 16 bits per component with or without colour component down sampling such as 4:2:2. These raster graphics formats and/or packed pixel representations can be specified by industrial video standards such as; ANSI/CTA-861, HDMI, ARINC818, Display Port, DVI, SMPTE SDI, SMPTE 2022 / 2110. The image display apparatus includes a display device wherein the image display apparatus displays images on the display device using binary pixels. The graphics processor can be considered an image or video source. In this regard, in some examples the graphics processor can receive the image or frame of video to be displayed from an image capture device such a camera or video camera including non-visible electromagnetic spectrum cameras and/or image sensors including near and far infrared cameras. The graphics processor could also be another source of video such as a peripheral device that receives images or video e.g. via streaming, terrestrial or satellite broadcast services or reads images or video from storage medium such as a DVD, hard drive or Blu-Ray. In other examples, the graphics processor may be an intermediary device, and the image or video may be received from another device and then processed at the graphics processor before being sent to the image display apparatus.

In step 110 of method 100, the graphics processor receives/obtains/captures/generates images, which may be frames of video, in a raster graphics format representation of the image. As mentioned above, in some examples, the image or frame of video can be captured by an image capture device, received from a third-party device, generated by a graphics processor or read from a storage medium. However, the skilled person would understand that any suitable method for obtaining or generating the image or frame of video can be used. The raster graphics format representation can include any raster of packed pixels as discussed above.

In stage 120, the method 100 comprises at the graphics processor, converting the raster graphics format representation of the image into a binary pixel representation of the image.

Figure 2 shows an example of a binary pixel representation of an image. The binary pixel representation can comprise a planar image format, a bitmap or any other suitable form of binary pixel representation. In Figure 2 a display device 200 comprising 12 pixels numbered 00 to 23 is shown. The skilled person would understand that 12 pixels are illustrated for simplicity and that the display device may comprise any number of pixels and in many cases will comprise considerably more than 12 pixels. While the binary pixel representation may comprise any suitable number of pixels, the skilled person would understand that the number of pixels in the binary pixel representation can be upper bounded by a number that can be encoded into the pixel packed raster frame. The binary pixel representation of an image to be displayed on a display device 200 comprises a bit string 21-00 - 21-23 for each pixel of the display device 200. In the example shown in Figure 2, this would result in 12 bit strings wherein bit string 21-00 corresponds to pixel 00, bit string 21-01 to pixel 01 and bit string 21-23 to bit string 23 etc. However, as mentioned above, the skilled person would understand that the display device may comprise any number of bits and is likely to comprise more than 12 bits and thus considerably more than 12 bit strings. In general, if the display device comprises m bits, then the binary pixel representation will comprise m bit strings. The bit strings correspond to a duration of time for which the image or frame of video is to be displayed on the display device. For example, if the frame is displayed for 0.04 seconds, 0.03 seconds, or 0.017 seconds then each bit string as a whole corresponds to this length of time. The duration of time can be referred to as a display time, frame time, frame display time, image display time or image time.

As shown in Figure 2, each bit string 21-00-21-23 comprises n bits numbered from 0 to n-1. For convenience the 0^{th} bit will be considered the most significant bit and the n-1^{th} bit the least significant bit. However, the skilled person would understand that this is a mere convenient numbering and the n-1^{th} bit could be considered the most significant bit and the 0^{th} bit the least significant bit. Each bit of a bit string corresponds to a portion of the display time. In some examples, the display time can be split so that a most significant bit represents half the display time, the next most significant bit a quarter of the display time etc. Hence, in some examples where the 0^{th} bit is the most significant and the n-1^{th} bit the least significant, the portion of the display time represented by a bit of each bit string is given by $\frac{1}{{2}^{i + 1}}$ wherein i is the number of the bit in the bit string. In other examples, each bit of the bit string may represent an equal portion of the display time. In yet other examples, the portion of the display time represented by each bit may vary according to any suitable scheme or pattern. Thus, the bits of each bit string can represent the display time in any suitable fashion. While in some cases the sum of the portion of the display time for the bits in each bit string may comprise the entirety of the display time, in other examples the sum of the portion of the display time for the bits in each bit string may comprise any suitable fraction of the display time.

Returning to Figure 1, as mentioned above, in stage 120, the method comprises at the graphics processor converting the raster graphics format representation of an image or video frame to a representation of the image or video frame that uses a binary pixel representation. This could be done using any suitable method and such methods would be familiar to the skilled person. Such methods include bit-plane slicing (PBS) although any other suitable method could be used.

In stage 130, the method comprises, still at the graphics processor, encoding or packing the binary pixel representation into a raster frame. This ensures that the standard video interface typically used to transmit the binary pixel representation can be used to transmit the binary pixel representation.

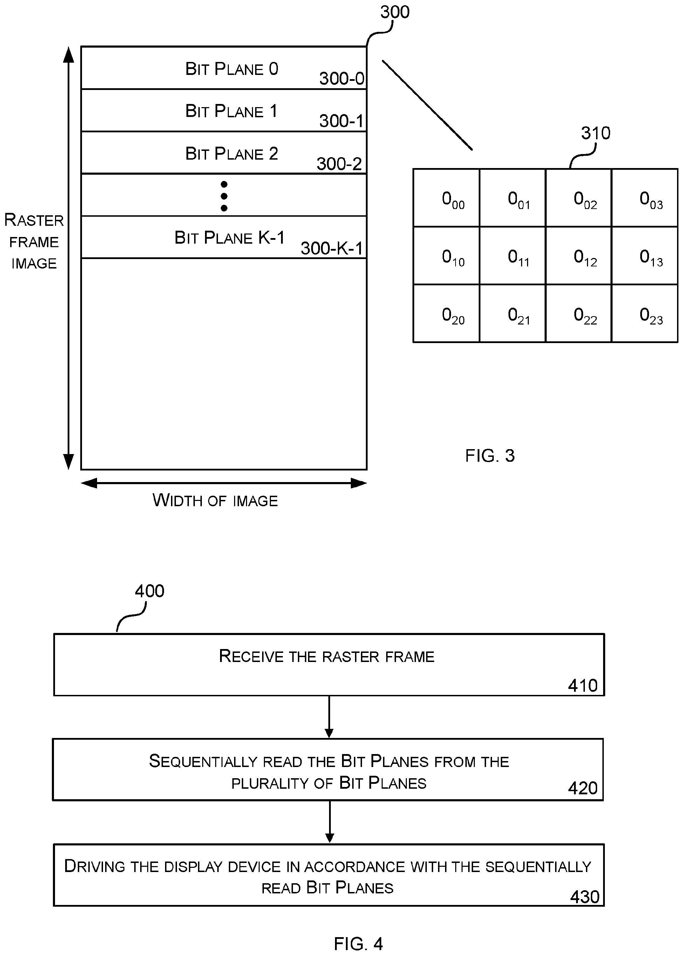

As shown in Figure 3, in stage 130, the graphics processor encodes or packs the binary pixel representation into a raster frame 300 using a plurality of sequential bitplanes 300-0-300-k-1. The bitplanes can also be referred to as bit plane slices. Each bitplane 300-0-300-k-1 comprises a bit for each pixel of the display device as shown in example bitplane 310. In addition, each bit in a bitplane is a same numbered bit for each pixel. Thus, each bitplane comprises m bits wherein m is the number of pixels and each bit in the j^{th} bitplane wherein j is from 0 to m-1 has a same number 0 to n-1 wherein, as mentioned above, there are n bits in each bit string. This means that the bits in each bitplane represent a same portion of the display time. The skilled person would understand any suitable arrangement and ordering of bits from the bit strings into the bitplanes can be used, and example orderings and arrangements are discussed in more detail below.

Returning to Figure 1, as mentioned above, in stage 130, the method comprises encoding or packing the binary pixel representation into a raster frame. In some examples, this can be done by sequentially packing the bitplanes into the raster frame so that the raster frame comprises a plurality of sequential bitplanes. In these examples, in some instances, the packing can be done into a buffer. This could be done by converting the binary pixel representation into a string of binary pixel values that represents the raster frame, wherein the string of pixel values that represent the raster frame correspond to the pixel packed raster format used by the video interface. The video interface can be an industrial standard video interface such as HDMI, ARINC818, Display Port, VGA, DVI, SMPTE SDI, and this can define the pixel packed raster format. In other examples, the bitplanes can be encoded into the binary pixel representation using video encoder that applies any necessary modifications to the bitplanes to enable them to be transmitted in the pixel packed raster format used by the video interface which can be an industrial standard video interface. For example, if a bit plane is to be encoded into a RGB24 pixel packed raster format, the binary string of the bit plane can be encoded as RGB pixel values in the raster format. The first bytes of the video frame which, in the RGB24 format, would normally represent the 8-bit red component value of the top left display pixel would be used to store the first 8 binary pixels values of the bit plane. Similarly, the second byte of the video frame which would normally represent the 8-bit green component value of the top left display pixel would store the next 8 binary pixels values of the bit plane and so forth. In stage 140, method 100 comprises transmitting the raster frame from the graphics processor to the video display apparatus using a video interface that uses the raster graphics format. The video interface can comprise a physical video interface such as defined by industrial video standards such as; HDMI, ARINC818, Display Port, VGA, DVI, and SMPTE SDI. The raster frame is transmitted via the interface through an appropriate cable to the video display apparatus. Alternatively, the video interface may comprise a wireless video interface such as broadcast wireless video being used as a low latency video link in examples where the broadcast wireless video supports uncompressed transmission. The video interface used can depend on the form of the raster frame. For example, if the raster frame is a HDMI frame, then a HDMI connector can be used, similar if the raster frame is an SMPTE SDI interface, then a BNC connector can be used.

In the above method the bitplanes are packed or encoded into the raster frame sequentially. As such, after transmission, they will be received by the image display apparatus sequentially. This means that a first bitplane will be received by the image display device before the entire raster frame since the bitplane forms only part of the raster frame. Each bitplane comprises a bit representing every pixel in the display device. The bits of the bit plane provide a representation of whether a pixel represented by that bit should be on or off for a particular interval of a display time for which the image represented by the raster frame should be displayed. Thus, once a bitplane has been received, the image display apparatus can use the bitplane to control the display device for the interval of the display time. During this interval, further bitplanes can be received and processed and the image display apparatus can then control the display device based on those bitplanes for their respective intervals of the display time. This enables the image display device to start displaying the image before the receipt of the entire raster frame. This removes the need for a frame buffer to enable receipt of the entire raster frame before the raster frame can be converted into the binary pixel representation of the image defined by the raster frame. This reduces latency in the transmission of images and video. In addition, the complexity of the image display apparatus can be reduced since the display apparatus no longer requires necessary video decoders to convert the raster graphics format representation into a binary pixel representation.

The method 100 can be performed for monochromic pixels or colour pixels. In other words, the display device of the image display apparatus can display images using binary pixels that represent a single colour component, or the display apparatus can comprise pixels that use binary pixels for multiple colour components. When monochromic or single colour component pixels are used then each pixel can be represented by a bit string for that colour component. When multiple colour components are used each pixel can be represented by a bit string for each colour component. In this example, the bit string for a respective pixel comprises a bit string for each colour component of the respective pixel. The bit string for a respective colour component of the respective pixel represents a portion of a display time of the image that the respective colour component of the respective pixel should be switched on to cause the display apparatus to display the respective colour component of the respective pixel on the display device at a brightness defined in the raster graphics representation. Here, each respective bitplane of the plurality of bitplanes comprises a respective same numbered bit from each bit string of the binary pixel representation for a single colour component of the binary pixel, wherein the plurality of bitplanes include bitplanes for each colour component of the binary pixels. In other words, there are separate bitplanes for each colour component, wherein the bitplanes for a respective colour component are formed from a same numbered bit from each bit string for that colour component e.g. each bitplane for a specific colour component comprises a same numbered bit from a bit string from each pixel for that colour component. When multiple colour components are used any suitable colour format could be used for example RGB or YCbCr. In some examples the display device has pixels that require certain drive signals. For example, the display device may comprise an RGB array of micro-LEDs or other forms of pixel that need to driven by RGB bitplanes. In this example, the bitplanes will be in an RGB format. Similarly, if the display device is driven with pixels in a YCbCr format or grey scale format, the bitplanes will take this format. Where the bitplanes are provided in a colour sequence such as RGB or YCbCr then the bitplanes for each colour component can be packed sequentially/separately within the raster frame. The colour component bitplanes can be packed in any suitable order.

Method 100 has focused on a method performed by the graphics processor. However, the method can also extend to the method performed by the image display apparatus.

Figure 4 is a flowchart showing a method 400 performed by the image display apparatus. The method comprises, at stage 410 receiving at the image display apparatus the raster frame. The raster frame can be received via an equivalent video interface used to transmit the raster frame. The video interface can comprise a physical video interface as defined by industrial video standards such as; HDMI, ARINC818, Display Port, VGA, DVI, and SMPTE SDI. For example, if the raster frame is a HDMI frame transmitted via a HDMI interface, then the raster frame can also be received by a HDMI interface. Similarly, if the raster frame is an SMPTE SDI interface, then a BNC connector can be used. The skilled person would understand that any suitable video interface for receiving the relevant raster frame can be used.

As the raster frame comprises a plurality of sequential bitplanes, the skilled person would understand that the bitplanes can be received sequentially with the first bitplane of the raster frame being received before the entire raster frame is received due to the first bitplane only taking up part of the raster frame.

The method 400 also comprises as stage 420, sequentially reading the bitplanes from the plurality of sequential bitplanes in the raster frame. The bitplanes are read sequentially in the order they are packed into the raster frame. Thus, if, as above, there are j bitplanes numbered from 0 to j-1, with the 0^{th} bitplane positioned first and the j-1^{th} bitplane last, then sequentially reading the bitplanes comprises reading the bitplanes from the 0^{th} bitplane to the j-1^{th} bitplane.

Method 400, then further comprises at stage 430, driving the display device of the image display apparatus according to the read bitplane by illuminating the pixels in the display as indicated by the bits of the bitplane. To this end, the reading 420 of the bitplane can comprise reading by/into a display driver of the display device in order to enable to the display device to display the bitplane in accordance with the bits in the bitplane. The bitplane can be used by the display driver of the display device to illuminate the display for the portion of the display time represented by that bitplane.

In some examples, the bitplanes are being received, read and used to drive the display in parallel. To this end, a first bitplane that forms part of the raster frame can be received and stored in a buffer. While the first bitplane is being read from the buffer and used to drive the display device, a second bitplane can be being received and stored in the buffer. This means that the first bitplane can be used to drive the display device while the second (and any other subsequent) bitplanes are still being received. Hence, the image represented by the bitplanes in the raster frame is being displayed while the raster frame is still being received by the image display apparatus. This means that display of the image represented by the binary pixel representation and the bitplanes can be started before the entirety of the raster frame is received.

Since each bitplane represents a portion of the display time provided a time to receive a subsequent bitplane is less than the sum of the portions of the time period of preceding bitplanes in the raster frame, the fact the image is being displayed before the entirety of the raster frame is received should not impact the display of the image. Hence, the transmission and receipt of the image as bitplanes reduces latency in the transmission of the image since it does not require the entirety of the image to be received by the image display apparatus before the image is displayed. In addition, as the image display apparatus receives the image already in a binary pixel representation, the image display apparatus can receive the image and use the received image format to directly drive the display device. This removes the need for image conversion technology at the image display apparatus, simplifying the display process. In addition, this reduces latency at the display apparatus since no frame storage is required at the display apparatus.

Where bitplanes are provided in a colour sequence such as RGB or YCbCr then the bitplanes may be displayed as they are received such as in field-sequential colour system displays. The order of the bitplanes can be chosen during packing to, for example, optimize brightness. Alternatively, the order of the bitplanes can be chosen based on the requirements of the display device. In addition, any buffers necessary to store bitplanes to ensure the display device is driven as required can be present to account for examples where, for example, display devices require simultaneous rather than sequential display of colour component bitplanes.

As mentioned above, the bitplanes can be ordered in the raster frame in any suitable fashion. The order which the bitplanes are packed/encoded into the raster frame reflects the order in which they will be used to control the binary pixels of the display device. This is because, in many examples, the image display apparatus containing the display device will receive and read the bitplanes in the raster frame and use them directly to drive the pixels of the display device in the order they are received with minimal further processing. This enables the use of a lightweight image display apparatus. The bitplanes are thus packed into the raster frame in the order in which they should be used to drive the pixels of the display device.

In one example, each bitplane can appear in the raster frame a single time. This minimizes the amount of data that needs to be sent between the graphics processor and the image display apparatus. In this example, the binary pixel representation comprises n sequential bitplanes that can be numbered from 0 to n-1. Thus, this in this example, there are the same number of bitplanes as there are bits in the bit strings. In some instances of this example, the i^{th} bitplane contains the i^{th} most significant bit. In these instances, the most significant bit can be used to drive the pixels of the image display apparatus for a longer portion of the display time than the less significant bits. For example, a bit can be used to drive the pixel of the image display for a portion of the display time given by $\frac{1}{{2}^{i + 1}}$, wherein i is from 0 to n-1. Having the i^{th} bitplane contain the i^{th} most significant bit wherein the bitplanes are ordered in the raster frame from 0 to n-1 maximises an amount of time from when a first bitplane is displayed to when a second bitplane needs to be displayed. Thus, this ordering of bitplanes can help ensure having the image display apparatus start processing the bitplanes as soon as they are received then processing them sequentially without buffering the entire raster frame before display does not impact display of the image.

In other instances of the example where each bitplane appears in the raster frame a single time, other orderings of the bitplanes compared to the significance of the bits can be used. For example, the bitplanes could be packed in the raster frame alternating between significant bits and lower significant bits using an ordering such as 0, n-1, 2, n-2, 3, n-3 ... , or an order such as n-1, 0, n-3, 2 ... 3, n-4, 1 n-2 etc. These orderings balance the portions of the display times over the entire raster frame so can reduce the need to store bitplanes at the image display apparatus before they are displayed. Such orderings can be used to mitigate effects such as dynamic contouring which may occur in, for example, wearable displays that have a binary pixel display device. Any other suitable ordering of the bitplanes in the raster frame can be used.

When multiple colour components are used then the bitplanes can be encoded into the raster frame in any suitable order. In some examples, the bitplanes can be ordered as described above with interleaving for the colour components. In other words, when a bitplane for a bit of significance appears in an ordering above then a bitplane for each colour component can appear in the ordering before the bitplane for the next bit of significance from the ordering appears. In other words, the ordering comprises groups of bitplanes with each group comprising a bitplane for each colour component. In other examples, the colour components may be sent sequentially with all bitplanes for a first colour component appearing before all the bitplanes for a second colour component. The above orderings may still be used but repeated separately for each colour component. In yet further examples a mix of grouping/interleaving colour components and separating colour components from each other may be used. In some examples the ordering can depend upon the requirements of the display device, for example where field-sequential colour system display devices are used, the ordering of the bit-planes can be selected in packing to be suitable for the display device. Here no buffering of colour component bitplanes may be required. However, in other examples buffering of the colour component bit planes can be used to allow simultaneous display of different colour component bitplanes.

As mentioned above, in some instances, the sum of the portion of the display time for each bit in the bit string may be less than the entire display time of the raster graphics format representation of the image. Hence, the image display can be driven for less than the entire display time of the raster graphics format representation of the image. In these scenarios the frame rate is kept constant and the remaining display time is left blank. This can reduce the effect of dynamic false contouring which occurs when movement in the display content or user's eye occurs meaning sub-frames represented in the bitplanes are no longer correctly fused by the user's vision system resulting in display artefacts. Minimizing the time the sequence of bitplanes is displayed reduces this effect.

While the above example has focused on having each bitplane appear in the raster frame a single time, this is not essential and in other examples, the binary pixel representation can comprise more than n sequential bitplanes. As discussed above, each bitplane contains a bit from each bit string wherein all bits in the bitplane are the same numbered bit from each bit string. To this end, a bitplane can be considered to represent a bit number of the bit strings. When more than n bitplanes are packed/encoded into a raster frame, then a bitplane representing at least one bit number occurs more than once in the sequential bitplanes. In some instances, where a more significant bit corresponds to a larger portion of the display time than a less significant bit, then the repeated bitplane corresponds to a bit number of a bit that is more significant than the least significant bit. In some examples, where a bitplane is repeated for a bit then each repetition of that bitplane corresponds to a same portion of the display time. Hence, if a portion of the display time for a given bit is t and the bitplane representing that bit is repeated p times then the portion of the display time for each bitplane representing the bit is given by $\frac{t}{p}$. In some instances, the bitplanes can be repeated so that each bitplane represents a same portion of the display time. For example, when a portion of the display time of a bit is given by $\frac{1}{{2}^{i + 1}}$, wherein i is from 0 to n-1 then each bitplane can be for a portion of the display time given by $\frac{1}{{2}^{n + 1}}$ thus a bitplane can occur 2^{*n*-*i*} times. This can simplify processing by the image display apparatus since the image display apparatus does not need to do any processing to determine a length of time for which to display a bitplane, instead all bitplanes are displayed for the same length of time. In other instances, the display time for a bit can vary with the bit number differently and the number of times the bitplane occurs can be chosen based on this variation. In another example a system with 8 bits (n=8, i=0 to 7) might use 10-bit planes x labelled 0 to 9. These could be display for the following durations: bitplanes x = 0, 1 corresponding to the most significant bit (i=0) displayed for $\frac{1}{2 \times {2}^{1}}$ of the display time, bitplanes x =2, 3 corresponding to second most significant bit (i=1) for $\frac{1}{2 \times {2}^{2}}$ of the display time, and bitplanes x= 4 to 9 corresponding to the 3^{rd} to 8^{th} most significant bits (i = 2 to 7) displayed for $\frac{1}{{2}^{i + 1}}$ of the display time. Here an example ordering may be 0, 9, 1, 8, 2, 7, 3, 6, 4 and 5. While the above provides specific examples, the skilled person would understand that any suitable arrangement of bitplane duplication is possible. Repeating bitplanes and, in particular, the bitplanes representing the most significant bits can minimise display artefacts such as dynamic contouring.

While the above instances have focused on each bitplane corresponding to a same portion of the display time when bitplanes for specific bit numbers are repeated, this is by no means essential. For example, there may be a maximum portion of the display time for which it is desirable to display any bitplane e.g. to ensure correct functioning of the display or to avoid artefacts in display of the image. In such cases, bitplanes corresponding to bits that represent specific portions of the display time longer than this maximum portion can be repeated with each repeated bitplane corresponding to a portion of the specific portion of the display time while bitplanes corresponding to bits that represent specific portions of the display time at or lower than this maximum portion can occur only once.

When bitplanes correspond to certain bit numbers are repeated, any suitable ordering of the bitplanes can be used. In some examples, this can comprise the bitplanes being arranged such that consecutive bitplanes in the sequential bitplanes are not representative of the same numbered bit. This can reduce artifacts or other problems displaying the image such as oversaturation of pixels or dynamic false contouring. Alternatively, to simplify displaying of the image bitplanes representative of the same numbered bit can be grouped together or packed/encoded into the raster image next to each other.

While the above has described packing a binary pixel representation of an image or frame of video into a raster frame, the packing or encoding may not require the entire raster frame. In other words, the plurality of sequential bitplanes may use less of the packed pixels than an entire raster frame with the rest of the display time left blank as explained above.

In some examples, the method 100 of Figure 1 can be repeated with multiple images. For example, each image can comprise a frame of video and the method 100 can be repeated for each frame of the video. To this end, the method can comprise converting, by a graphics processor, raster graphics representations of one or more further frames of video into binary pixel representations. This conversion process can be performed as discussed in stage 120 above and the binary pixel representation for each frame can comprise a representation as discussed with respect to Figure 2 above. In other words, the binary pixel representation can comprise a bit string for each pixel of the display device wherein each bit string as a whole corresponds to a display time for the frame represented by the binary pixel representation. Each bit string comprises a number of bits numbered from 0 to n-1. When multiple images of frames of video are being transmitted, for example in the case of continuous video frames then the encoding of the binary pixel representation into a raster frame described in step 130 may be completed before the raster frame is transmitted. This can be achieved by having a memory, storage or buffer that enables one raster frame to be constructed while a previous raster frame is being transmitted. In some examples, the raster frame can be packed into this memory, storage or buffer in one operation from the buffer or memory in which the encoding occurs. In other examples, the encoding can be directly into the memory, storage or buffer. In some examples the memory, storage or buffer can be a double frame buffer or a two-frame rolling buffer.

When video of more than one frame is being transmitted from the graphics processor, the method can then also comprise encoding the binary pixel representation of each frame into one or more raster frames using a plurality of bitplanes as discussed above. In some examples, each frame of video may be encoded into a single raster frame irrespective of whether the frame of video takes up the entirety of the raster frame. In other examples, when a binary pixel representation of a frame of video does not take up an entire raster frame, then more than one frame of video can be packed/encoded into a raster frame. In some examples, a number of binary pixels representations encoded in a raster frame may comprise a fraction. In other words, a binary pixel representation may be split between two raster frames. For example, a first raster frame may comprise one or more whole number of video frame binary pixel representations and then a fraction of a subsequent video frame binary pixel representation. The second raster frame may then comprise the remaining fraction of the subsequent video frame binary pixel representation, one or more whole number of further video frame binary pixel representations and potentially a fraction of an additional video frame binary pixel representation. This can lead to a more efficient packing and transmission of video frames and allows different rates of transmission than the rate of the raster graphics format video.

The examples described above define multiple ways in which the binary pixel representation can be packed/encoded into the raster frame. In some examples, the graphics processor can use a packing/encoding of the binary pixel representation into the raster frame that is known by the image display apparatus. Thus, when the image display apparatus receives what are seemingly raster frames, it has the necessary information to process the binary pixel representation. The information necessary for processing could for example be pre-agreed by the graphics processor and the image display apparatus and stored at respective memories in the graphics processor and image display apparatus.

In other examples, the video interface may be used to send raster graphics representations of some images and binary pixel representations of other images. Alternatively, the packing of bitplanes into the raster frames may change dependent upon, for example, urgency of transmission or level of detail of the images. Thus, in some examples, the method can further comprise the graphics processor writing control data into the raster frame. The image display apparatus can then read this control data and use it to determine how to process the bitplanes in the raster frame. In some examples, the control data can indicate that the data in the raster frame is a binary pixel representation of an image rather than a raster graphics representation. This enables the graphics processor to also process standard raster images. In addition or as an alternative, the control data can comprise an indication of a size of each bitplane and/or an indication of a portion of the display time represented by each bitplane. This ensures the image display apparatus can determine how the bitplanes are packed into the raster frame and also ensures the image display apparatus knows for how long to display each bitplane. Alternatively or in addition, the control information can comprise information as to how the binary pixel representations are packed/encoded in the raster frame. For example, where the raster frame contains one or more (including fractions) binary pixel representations, the control information can provide information as to delineation of the binary pixel representations. The control information could also or alternatively comprise a start and/or end point of the binary pixel representation in the raster frame so the image processing apparatus can identify/obtain the binary pixel representation.

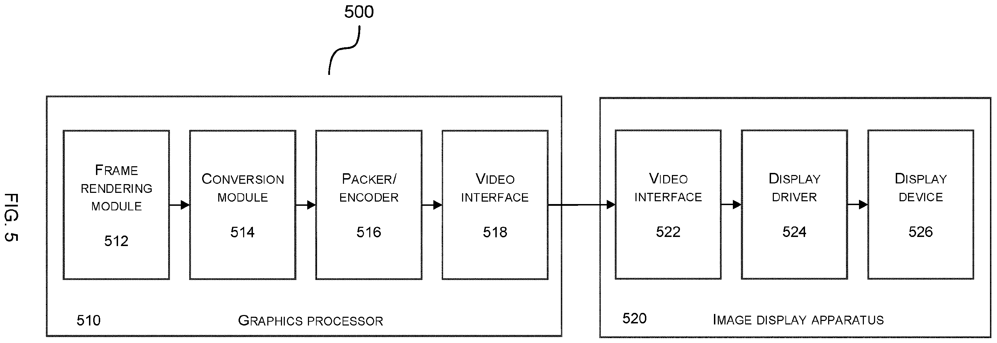

Moving on to Figure 5, Figure 5 shows an example of a system 500 that can be used to implement the above methods. The system 500 comprises a graphics processor 510 and an image display apparatus 520. In the example shown in Figure 5, the graphics processor 510 comprises a frame rendering module 512 configured to render the raster graphics format images and a conversion module 514 configured to convert the raster graphics format representation of images to binary pixel representations as described with respect to stage 120 in Figure 1. The graphics processor 510 then further comprises a packer or encoder 516 configured to pack or encode the binary pixel representation in a raster frame. The graphics processor 510 also comprises a video interface 518 over which the raster frame is transmitted to the image display apparatus 520.

The image display apparatus 520, comprises a video interface 522 configured to receive raster frames and a display driver 524 configured to receive the raster frames and extract the bitplanes from the raster frames then use these bitplanes to drive the display device 526 wherein the display device 526 can form part of the image display apparatus 520. As the images received by the image display apparatus 520 are already in a binary pixel representation, the images do not need to be converted to this representation by the image display apparatus 520. Thus, the image display apparatus 520 does not need to comprise a video decoder/frame rendering device or a conversion module and these components may not be present. In addition, the image display apparatus 520 does not need to store a whole raster frame before driving the display device 526. Thus, a frame buffer for the raster frame is not required and this may not be present. This leads to lower latency and lower complexity at the display apparatus 520. This can be useful when the image display apparatus 520 is a small device or a device with limited processing power such as a HMD, smartwatch or digital point of sale (POS) or graphical processing unit (GPU).

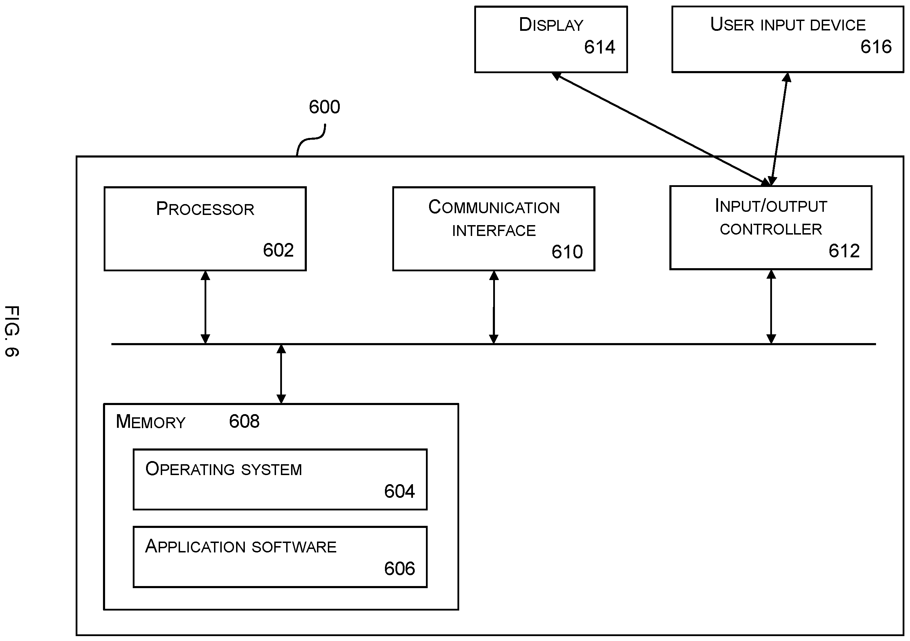

Figure 6 illustrates various components of an exemplary computing-based device 600 which may be implemented as any form of a computing and/or electronic device, and in which embodiments of the graphics processor or image display apparatus may be implemented.

Computing-based device 600 comprises one or more processors 602 which may be microprocessors, controllers or any other suitable type of processors for processing computer executable instructions to control the operation of the device in order to implement the methods discussed above. In some examples, for example where a system on a chip architecture is used, the processors 602 may include one or more fixed function blocks (also referred to as accelerators) which implement a part of the method described above in hardware (rather than software or firmware). Platform software comprising an operating system 604 or any other suitable platform software may be provided at the computing-based device to enable application software 606 to be executed on the device.

The computer executable instructions may be provided using any computer-readable media that is accessible by computing based device 600. Computer-readable media may include, for example, computer storage media such as memory 608 and communications media. Computer storage media, such as memory 608, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 608) is shown within the computing-based device 600 it will be appreciated that the storage may be distributed or located remotely and accessed via a network or other communication link (e.g. using communication interface 610).

The computing-based device 600 also comprises an input/output controller 612 arranged to output display information to a display device 614 which may be separate from or integral to the computing-based device 600. The display information may provide a graphical user interface. The input/output controller 612 is also arranged to receive and process input from one or more devices, such as a user input device 616 (e.g. a mouse or a keyboard). In an embodiment the display device 614 may also act as the user input device 616 if it is a touch sensitive display device. The input/output controller 612 may also output data to devices other than the display device, e.g. a locally connected printing device (not shown in Figure 6).

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

## Claims

1. A method (100) of transmitting an image represented in a raster graphics format from a graphics processor (510) to an image display apparatus (520) that displays images on a display device (526) using binary pixels, the method comprising:
converting (120), at a graphics processor (510), the raster graphics format representation of the image into a binary pixel representation of the image, wherein:
the binary pixel representation comprises a bit string (21-00 - 21-23) for each pixel (00-23), wherein the bit string for each pixel represents a portion of a display time of the image that the pixel (00-23) should be switched on to cause the display image apparatus (520) to display the pixel (00-23) on the display device (526) at a brightness defined in the raster graphics representation; and
each bit string represents the portion of the display time using n bits numbered from 0 to n-1;
encoding (130), at the graphics processor (510), the binary pixel representation into a raster frame (300) by encoding the binary pixel representation using a plurality of sequential bitplanes (300-0 - 300-K-1 ), wherein each respective bitplane of the plurality of bitplanes comprises a respective same numbered bit from each bit string (21-00 - 21-23) of the binary pixel representation; and
transmitting (140) the raster frame (300) from the graphics processor (510) to an image display apparatus (520) using a video interface (518, 522) that uses the raster graphics format.

2. The method (100) of claim 1, wherein:
the image display apparatus (520) displays images using binary pixels comprising a plurality of colour components;
the bit string (21-00 - 21-23) for a respective pixel (00-23) comprises a bit string for each colour component of the respective pixel, wherein the bit string for a respective colour component of the respective pixel represents a portion of the display time of the image that the respective colour component of the respective pixel should be switched on to cause the image display apparatus (520) to display the respective colour component of the respective pixel on the display device (526) at a brightness defined in the raster graphics representation; and
each respective bitplane of the plurality of bitplanes (300-0 - 300-K-1) comprises a respective same numbered bit from each bit string of the binary pixel representation for a single colour component of the binary pixel, wherein the plurality of bitplanes include bitplanes for each colour component of the binary pixels.

3. The method (100) of any previous claim, wherein the ordering of the bitplanes (300-0 - 300-K-1) in the sequential bitplanes is an order in which the bits in bitplanes will be used to control the binary pixels of the display device (526).

4. The method (100) of any of any previous claim, wherein encoding the binary pixel representation using the plurality of sequential bitplanes (300-0 - 300-K-1) comprises either:
encoding the binary pixel representation into n sequential bitplanes numbered from 0 to n-1, and optionally wherein the i^{th} bitplane contains the i^{th} most significant bit from the bit string for each pixel of the image, wherein i is from 0 to n-1; or
encoding the binary pixel representation into more than n sequential bitplanes, wherein a bitplane representing a bit number more significant than the least significant bit occurs more than once in the sequential bitplanes.

5. The method (100) of any previous claim further comprising:
receiving (410), at the image display apparatus (520), the raster frame (300); and
sequentially reading (420), at the image display apparatus (520), a bitplane from the sequential bitplanes (300-0 - 300-K-1) in the raster frame (300) wherein the bitplanes are read in sequential order; and
sequentially driving (430) the display device (526) according to the read bitplane by illuminating pixels in the display device (526) as indicated by the bits of the bitplane.

6. The method (100) of claim 5, wherein:
the receiving (410) the raster frame comprises receiving the sequential bitplanes sequentially; and
the sequentially reading (420) and driving (430) the display device (526) with a bitplane from the sequential bitplanes comprises reading and driving the display device (526) with an initial bitplane while a further bitplane is being received.

7. The method (100) of any previous claim, wherein the image comprises a first frame of video and the method further comprises:
converting (120), at the graphics processor, raster graphics format representations of one or more further frames of video into binary pixel representations of the frames of video, wherein:
the binary pixel representation of each frame of the one or more further frames comprises a bit string (21-00 - 21-23) for each pixel (00-23), wherein each bit string (21-00 - 21-23) represents a portion of a display time for the frame that the pixel corresponding to the bit string should be switched on to cause the display device (526) of the image display apparatus (520) to display the pixel at a brightness defined in the raster graphics representation of the frame; and
each bit string (21-00 - 21-23) represents the portion of the display time using n bits numbered from 0 to n-1; and
encoding (130), at the graphics processor (510), the binary pixel representations of each frame into one or more raster frames by encoding the binary pixel representation of each frame using a plurality of sequential bitplanes (300-0 - 300-K-1), wherein each respective bitplane of the plurality of bitplanes (300-0 - 300-K-1) for each frame comprises a respective same numbered bit from each bit string of the binary pixel representation.

8. The method (100) of claim 7, wherein a binary pixel representation for more than one frame of video is encoded into a single raster frame of the one or more raster frame.

9. The method (100) of any previous claim, wherein encoding the binary pixel representation using a plurality of sequential bitplanes (300-0 - 300-K-1) comprises:
encoding the binary pixel representation using a plurality of sequential bitplanes (300-0 - 300-K-1) such that the plurality of sequential bitplanes are encoded using less than an entire frame period allowed by the raster frame (300).

10. The method (100) of any previous claim, further comprising:
writing, by the graphics processor (510), control data into the raster frame (300), wherein the control data comprises at least one of:
an indication of a size of each bitplane;
an indication of a portion of the display time represented by each bitplane;
and
an indication of a start and/or end point of the binary pixel representation within the raster frame (300).

11. A graphics processor (510) comprising:
a processor; and
a memory storing instructions, the instructions when executed by the processor cause the processor to perform a method comprising:
converting (120) a raster graphics format representation of an image into a binary pixel representation of the image, wherein:
the binary pixel representation comprises a bit string (21-00 - 21-23) for each pixel (00-23), wherein the bit string (21-00 - 21-23) for each pixel (00-23) represents a portion of a display time for the image that the pixel should be switched on to cause a display apparatus (520) to display the pixel on a display device (526) at a brightness defined in the raster graphics representation; and
each bit string represents the portion of the display time using n bits numbered from 0 to n-1;
encoding (130) the binary pixel representation into a raster frame (300) by encoding the binary pixel representation using a plurality of sequential bitplanes (300-0 - 300-K-1), wherein each respective bitplane of the plurality of bitplanes comprises a respective same numbered bit from each bit string of the binary pixel representation;
transmitting (140) the raster frame (300) from the graphics processor (510) to the image display apparatus (520) using a video interface (518, 522) that uses the raster graphics format.

12. The graphics processor (510) of claim 11, wherein:
the image display apparatus (520) displays images using binary pixels comprising a plurality of colour components;
the bit string (21-00 - 21-23) for a respective pixel comprises a bit string for each colour component of the respective pixel, wherein the bit string for a respective colour component of the respective pixel represents a portion of a display time of the image that the respective colour component of the respective pixel should be switched on to cause the image display apparatus (520) to display the respective colour component of the respective pixel on the display device (526) at a brightness defined in the raster graphics representation; and
each respective bitplane of the plurality of bitplanes comprises a respective same numbered bit from each bit string of the binary pixel representation for a single colour component of the binary pixel, wherein the plurality of bitplanes include bitplanes for each colour component of the binary pixels.

13. The graphics processor (510) of claim 11, wherein encoding the binary pixel representation using the plurality of sequential bitplanes (300-0 - 300-K-1) comprises:
encoding the binary pixel representation into more than n sequential bitplanes, wherein a bitplane representing a bit number more significant than the least significant bit occurs more than once in the sequential bitplanes.

14. A system (500) comprising:
a graphics processor (510) according to any of claims 11 to 13; and
an image display apparatus (520), the image display apparatus comprising:
a display device (526);
a processor; and
a memory, the memory storing instructions that when executed by the processor cause the processor to perform a method comprising:
receiving (410) the raster frame;
sequentially reading (420) a bitplane from the sequential bitplanes (300-0 - 300-K-1) in the raster frame wherein the bitplanes are read in sequential order; and
sequentially driving (430) the display device (526) according to the read bitplane by illuminating pixels in the display device as indicated by the bits of the bitplane.

15. The system (500) of claim 14, wherein:
the receiving the raster frame (300) comprises receiving the sequential bitplanes (300-0 - 300-K-1) sequentially; and
the sequentially reading (420) and driving (430) the display device (516) with a bitplane from the sequential bitplanes comprises reading and driving the display device (526) with an initial bitplane while a further bitplane is being received.
